# EUROPEAN PATENT SPECIFICATION

(11) **EP 1 215 415 B1**
(45) Date of publication and mention of the grant of the patent: **28.09.2005**
(21) Application number: 01310410.4
(22) Date of filing: 13.12.2001
(51) Int. Cl.: F16H 7/08

(54) **A tensioner for a chain or belt**
Ketten- oder Riemenspanner
Dispositif tendeur pour un élément souple sans fin

(30) Priority: 14.12.2000 GB 0030488
(43) Date of publication of application: 19.06.2002
(73) Proprietor: RENOLD Plc, Manchester M22 5WL (GB)
(72) Inventor: Poiret, Christian, 62137 Coulogne (FR)
(74) Representative: Every, David Aidan

(56) References cited:
- DE-A- 3 639 389
- DE-A- 19 631 607
- GB-A- 1 149 817

## Description

The present invention relates to a tensioner for a chain or belt and more particularly, but not exclusively, to a tensioner for imparting tension to a chain or belt of the kind that is used, for example, in a timing drive of an internal combustion engine of a vehicle.

Internal combustion engines of motor vehicles often include a timing belt or chain drive that passes over sprockets on the crankshaft and camshaft and is used to ensure that the camshaft is driven synchronously with the crankshaft. The tension in such a chain or belt varies considerably as a result of the expansion and contraction of engine components with temperature, torsional vibrations imparted from the crankshaft and camshaft, the engine speed and chain elongation as a result of chain wear or temperature variations in chain components. It is important to impart to and maintain tension in the chain or belt so as to reduce noise and the likelihood of the chain or belt jumping from the teeth of the sprockets.

Tensioners for chains or belts generally comprise a housing that defines an open-ended cylinder in which a plunger is slidably movable in a longitudinal direction and is biased outwardly of the cylinder by a coil spring so as to impart tension to the chain or belt. A variable volume fluid pressure chamber is defined between a hollow in the plunger and the cylinder walls. A check valve permits hydraulic fluid to pass from a source such as an oil pump into the pressure chamber but prevents passage of fluid in the reverse direction. The fluid in the pressurised chamber also serves to bias the plunger out of the cylinder towards the chain or belt.

The combined effect of the hydraulic fluid pressure and the coil spring biasing forces moves the plunger out of the housing and into contact with the chain or belt so as to take up the slack. An opposite resisting force is imparted from the chain to the plunger as a result of the tension induced in the chain by the drive. If the chain or belt is subjected to an increase in tension the resulting force applied to the plunger attempts to move it into the cylinder. However, such movement is prevented by the check valve which prevents the escape of hydraulic fluid out of the chamber. The incompressible nature of the hydraulic fluid prevents instant return movement of the plunger although a small annular clearance between the plunger and the cylinder wall may permit some fluid escape and limited slow retraction of the plunger.

The hydraulic fluid is supplied to the check valve of the tensioner from a pressurised source via a radial passage, as disclosed in DE-A-3639389 in a wall of the tensioner housing.

One type of known tensioner is screw-fitted into a bore defined in the engine block so as to ensure that it is correctly positioned with respect to the chain or belt. Immediately behind the cylinder bore there is a chamber for receipt of the check valve and the radial passage extends therefrom. Beyond the radial passage there is an external annular thread for engagement with a complementary thread in the bore and finally the housing terminates in a head that can be engaged by an insertion tool. The head is designed to remain outside the bore once the tensioner has been inserted and may have flats to enable a spanner or other suitable tool to be used for insertion and tightening.

It is an object of the present invention to provide for a chain or belt tensioner having a more compact arrangement.

According to a first aspect of the present invention there is provided a chain or belt tensioner comprising a plunger displaceable in a bore of a housing between retracted and extended positions, a variable volume chamber defined by the plunger and the bore for receipt of pressurised hydraulic fluid, a fluid passage passing from the chamber through the housing to an inlet for communication with a source of hydraulic fluid, the housing having an external thread for connection into a supporting threaded bore, characterised in that at least part of the thread has a transverse groove that is in communication with the inlet of the fluid passage so as to permit fluid flow across the thread.

The arrangement of the present invention enables the housing bore and therefore the chamber to extend further into the housing in comparison to previous designs since the fluid passage inlet (and therefore the closed end of the bore) does not have to be clear of the threaded portion of the housing.

In a preferred embodiment the thread is disposed radially outboard of the bore in the housing. This is in contrast to prior designs in which the thread is disposed rearwardly of the bore in the housing and distanced from it to provide space for the radial passage.

Preferably there is provided a check valve between said chamber and the fluid passage for preventing the flow of fluid from the chamber to the fluid passage

The thread is ideally disposed in a direction along a longitudinal axis of the tensioner, between an open end of the bore and the check valve.

Preferably the fluid passage extends from an end of the check valve that is distal from the bore to one end of the thread.

Preferably the tensioner has a fixing head by which it may be inserted into said supporting threaded bore. The check valve may be disposed in a cavity in said head.

The head may be disposed adjacent the thread and preferably at one end of the tensioner. The passage ideally extends from the cavity at said distal end of the check valve to the thread and may be disposed at an acute angle to the longitudinal axis of the tensioner.

The tensioner preferably further comprises a fluid seal that is adjacent to the tensioner head.

The combination of a chain or belt tensioner and a support member in which the tensioner is received, the tensioner comprising a plunger displaceable in a bore of a housing between retracted and extended positions, a variable volume chamber defined by the plunger and the bore for receipt of pressurised hydraulic fluid, a fluid passage passing from the chamber through the housing to an inlet for communication with a source of hydraulic fluid, the housing having an external thread for connection into a supporting bore in the support member, the bore having an internal thread, characterised in that at least part of one of the internal or external threads or both has a transverse groove that is in communication with the inlet of the fluid passage so as to permit fluid flow across the thread.

A specific embodiment of the present invention will now be described, by way of example only, with reference to the accompanying drawings in which:
Figure 1 is a longitudinal part-sectioned view of a chain tensioner according to the prior art;
Figure 2 is a longitudinal part-sectioned view of a chain tensioner in accordance with the present invention; and
Figure 3 is a perspective view from one side of the present invention.

Referring now to the drawings, the prior art chain tensioner has a housing body 1 that is designed to be inserted into a bore defined in an internal combustion engine cylinder block (not shown). To this end the body 1 has, at one end, a head 2 with a plurality of flats F for engagement with an appropriate fastening tool (not shown) and an adjacent threaded portion 3 by which the tensioner is screw-engaged in the engine bore (not shown).

The tensioner body 1 is generally cylindrical and has a blind bore 4 that is open at one end to receive a slidable hollow plunger 5. The exposed end 5a of the plunger 5 is closed and engageable with a movable chain guide or shoe (not shown).

The interior of the bore 4 and the plunger 5 define a variable volume pressure chamber 7 that is filled with hydraulic oil. The chamber 7 is supplied with oil from an oil reservoir (not shown) via a radial passage 8 and a ball check valve 9. When the pressure of the oil supplied through the passage 8 exceeds that in the chamber 7 the ball is lifted from its check valve seat and permits passage of oil into the chamber 7. Conversely, when the oil pressure in the chamber 7 exceeds that of the supply the ball returns to its seat and the check valve 9 is closed so as to prevent escape of oil from the chamber 7. A nozzle 10 inside the chamber assists the flow of the hydraulic fluid therein.

It will be seen from the figure that the radial passage 8 is disposed in a region of the housing between the base of the bore 4 and the area surrounded by the external thread 3.

The plunger 5 has a small central opening 11 at its closed end that serves as a vent for air and excess fluid in the pressure chamber 7 as is well known. The presence of any trapped air in the oil in the chamber 7 is undesirable and is vented to atmosphere via the vent opening 11. Access to the vent opening 11 is restricted by a venting plug 12 of known design so as to limit the escape of air and fluid.

A compression spring 13 is disposed coaxially between the closed end of the plunger 5 and the base of the housing bore 4 (for clarity only part of spring is shown in the figures) and serves to bias the plunger 5 outwards of the housing body 1 towards the chain so as to impart tension thereto.

Interposed between the plunger 5 and the compression spring 13 there is provided a ratchet locking mechanism 14 that is designed to prevent excessive retraction of the plunger 5 even when the fluid pressure is low. The mechanism is embodied by a cylinder 15 with a helically toothed channel in which a pawl (hidden) on the plunger 5 is engaged in step-wise fashion.

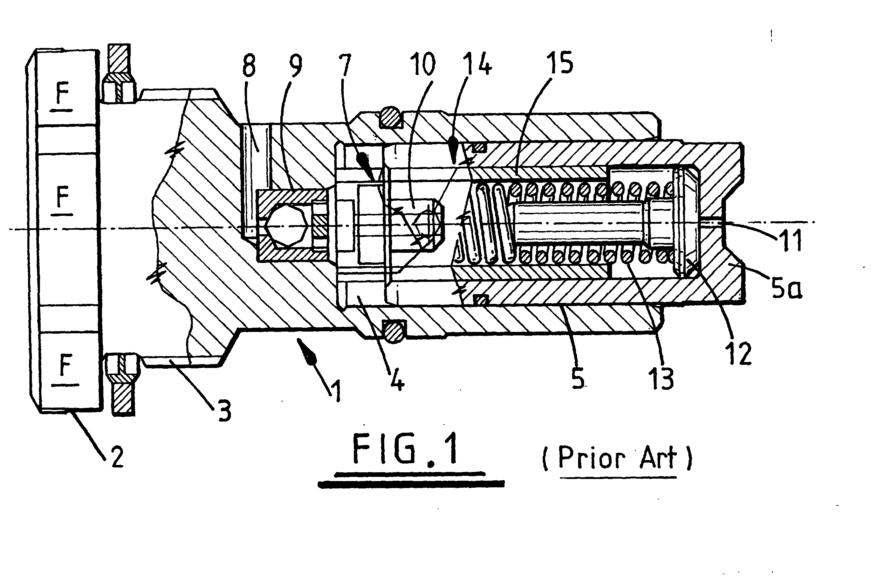

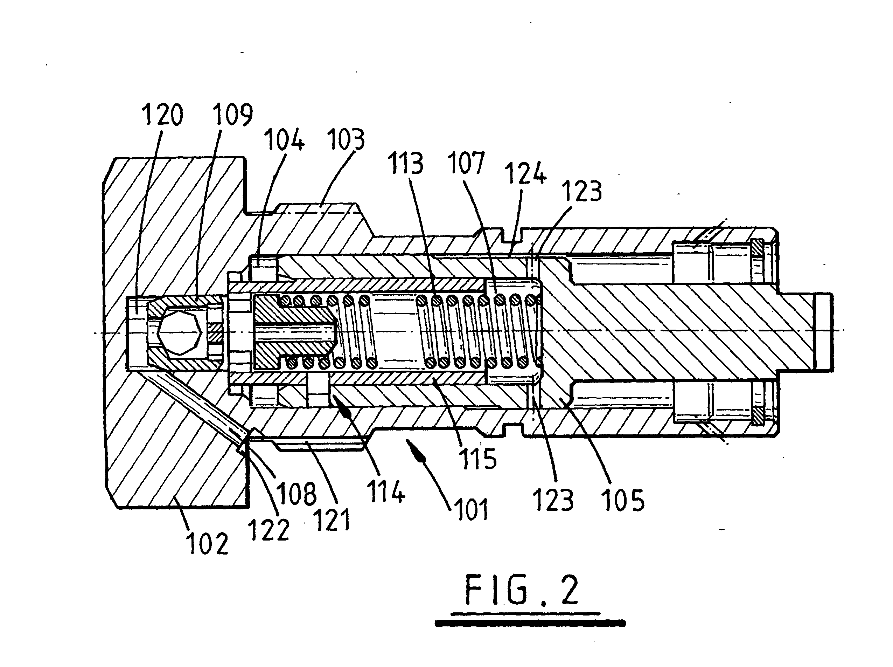

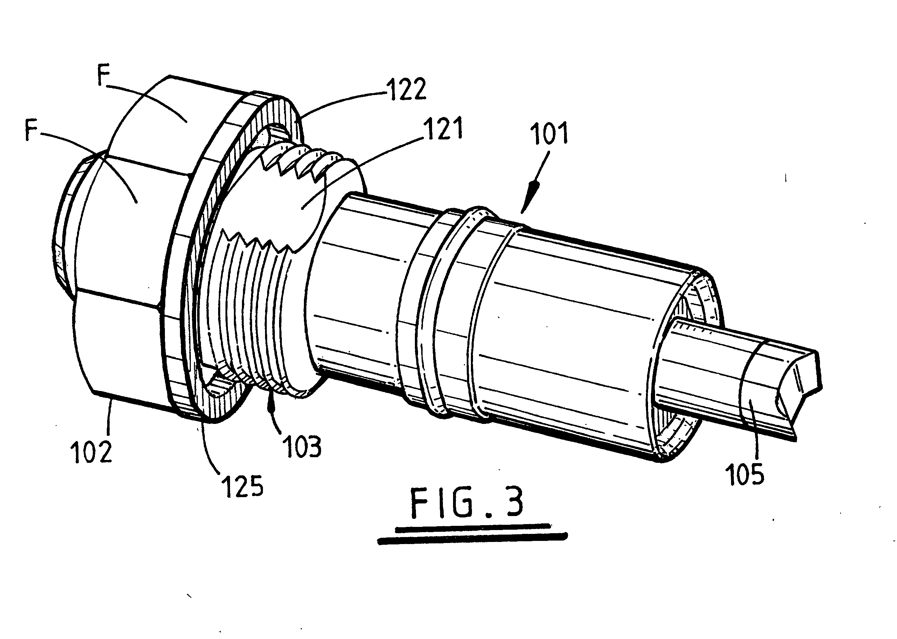

Referring now to figures 2 and 3, the exemplary tensioner of the present invention has many features in common with the prior art design. Parts corresponding to those of figure 1 are indicated by the same reference numerals increased by 100 and are not further described except insofar as they differ from their counterparts in figure 1. The significant difference over the prior art design of figure 1 is that the variable volume chamber 107 extends further rearwardly into the area surrounded by the exterior thread 103 and the check valve 109 is disposed in a cavity 120 defined in the head 102. The radial oil passage has been replaced by a passage 108 that extends at an acute angle to the longitudinal axis of the tensioner from the rear of the check valve cavity 120 to the start of the thread 103 immediately adjacent to the head 102. The thread 103 has a transverse groove 121 running across it to carry oil from the supply to an inlet 122 of the passage 108 in the tensioner. That way the tensioner of the present invention can be used in existing engines without the need for modification to alter the position of the egression of fluid from the reservoir. The transverse groove 121 is shown in this particular embodiment as being substantially perpendicular to the direction of the thread 103 but it will be appreciated that any suitable groove or recess that allows passage of the oil across the thread at any appropriate angle may be used. It is the provision of the groove 121 that permits the check valve 109 and base of the bore 104 to be located at deeper positions in the housing rather than it being necessary for the inlet 122 of the radial passage 108 to be clear of the thread 103. The compact arrangement thereby enables the tensioner to be shorter in length or for the plunger 105 and bore 104 to be longer and thereby allow a longer stroke.

The embodiment of figures 2 and 3 shows an alternative plunger design to that of the prior art but it is to be understood that the present invention has application to any plunger design. The first part of the plunger 105 is hollow for receipt of the compression spring 113 and the end that projects from the bore 104 is solid. The closed end of the hollow has a plurality of radial passages 123 that serve to allow passage of the oil from inside the plunger 105 to a small annular clearance 124 between the plunger 105 and the bore 104. The hydraulic oil thus acts on both sides of the plunger 105 with equal pressure. The annular clearance 124 throttles the hydraulic oil during relative movement of the plunger 105 and housing body 101.

An annular seal 125 (shown in figure 3 only) is provided adjacent to the head 102 so as to seal the tensioner in the threaded bore in the engine cylinder block.

The provision of the groove 121 that passes across the thread 103 and allows the passage of hydraulic oil enables the internal configuration of the tensioner to be modified in a beneficial way.

It will be appreciated that numerous modifications to the above described design may be made without departing from the scope of the invention as defined in the appended claims. For example, any number of transverse grooves may be provided to allow passage of the oil across the thread. The number and the dimensions of each groove are selected to provide the most appropriate oil feed rate to the tensioner for any particular application. The groove width or length may be varied to adjust the flow resistance of the oil or conversely the flow rate may purposely be increased by enlarging the cross-sectional area of the groove.

It is to be understood that instead of the groove being provided on the tensioner it may be defined across the internal thread of the bore in which the tensioner is received.

## Claims

1. A chain or belt tensioner comprising a plunger (105) displaceable in a bore (104) of a housing between retracted and extended positions, a variable volume chamber defined by the plunger (105) and the bore for (104) receipt of pressurised hydraulic fluid, a fluid passage passing from the chamber (107) through the housing to an inlet for communication with a source of hydraulic fluid, the housing having an external thread for connection into a supporting threaded bore, **characterised in that** at least part of the thread (103) has a transverse groove that is in communication with the inlet of the fluid passage (108) so as to permit fluid flow across the thread (103).

2. A chain or belt tensioner according to claim 1, wherein the thread (103) is disposed radially outboard of the bore (104) in the housing.

3. A chain or belt tensioner according to claim 1 or 2, further comprising a check valve (109) between said chamber (101) and the fluid passage (108) for preventing the flow of fluid from the chamber (107) to the fluid passage (108).

4. A chain or belt tensioner according to claim 3, wherein the thread (103) is disposed, in a direction along a longitudinal axis of the tensioner, between an opening of the bore (104) and the check valve (109).

5. A chain or belt tensioner according to claim 3 or 4, wherein the fluid passage (108) extends from an end of the check valve (109) that is distal from the bore (104) to one end of the thread (103).

6. A chain or belt tensioner according to any one of claims 3 to 5, further comprising a fixing head (102) by which the tensioner may be inserted and tightened into said supporting threaded bore.

7. A chain or belt tensioner according to claim 6, wherein the check valve (109) is disposed in a cavity in said head (102).

8. A chain or belt tensioner according to claim 6 or 7, wherein the head (102) is disposed adjacent to the thread (103) and at one end of the tensioner.

9. A chain or belt tensioner according to claim 7, wherein the passage (108) extends from the cavity at said distal end of the check valve (109) to the thread (103).

10. A chain or belt tensioner according to claim 9, wherein the passage (108) is disposed at an acute angle to the longitudinal axis of the tensioner.

11. A chain or belt tensioner according to any preceding claim, further comprising a fluid seal (125) that is adjacent to the tensioner head (102).

12. The combination of a chain or belt tensioner and a support member in which the tensioner is received, the tensioner comprising a plunger (105) displaceable in a bore (104) of a housing between retracted and extended positions, a variable volume chamber (107) defined by the plunger (105) and the bore (104) for receipt of pressurised hydraulic fluid, a fluid passage passing (108) from the chamber (107) through the housing to an inlet for communication with a source of hydraulic fluid, the housing having an external thread (103) for connection into a supporting bore in the support member, the bore having an internal thread, **characterised in that** at least part of one of the internal or external threads or both has a transverse groove (121) that is in communication with the inlet of the fluid passage (108) so as to permit fluid flow across the thread (103).

13. The combination of claim 12, wherein the support member is part of a housing for an internal combustion engine.

## Patentansprüche

1. Ketten- oder Riemenspanner, umfassend einen Kolben (105), der in einer Bohrung (104) eines Gehäuses zwischen einer eingezogenen und einer ausgefahrenen Position verschiebbar ist, eine von dem Kolben (105) und der Bohrung (104) definierte Kammer mit veränderlichem Volumen zum Aufnehmen von Druckhydraulikfluid, einen von der Kammer (107) durch das Gehäuse zu einem Einlass verlaufenden Fluiddurchgang zur Verbindung mit einer Hydraulikfluidquelle, wobei das Gehäuse ein Außengewinde zum Anbringen in einer tragenden Bohrung mit Gewinde hat, **dadurch gekennzeichnet, dass** wenigstens ein Teil des Gewindes (103) eine Querrille hat, die mit dem Einlass des Fluiddurchgangs (108) in Verbindung steht, um Fluid über das Gewinde (103) fließen zu lassen.

2. Ketten- oder Riemenspanner nach Anspruch 1, bei dem das Gewinde (103) radial außen an der Bohrung (104) im Gehäuse angeordnet ist.

3. Ketten- oder Riemenspanner nach Anspruch 1 oder 2, ferner umfassend ein Rückschlagventil (109) zwischen der Kammer (107) und dem Fluiddurchgang (108), um den Fluss von Fluid von der Kammer (107) zum Fluiddurchgang (108) zu verhindern.

4. Ketten- oder Riemenspanner nach Anspruch 3, bei dem das Gewinde (103) in einer Richtung entlang einer Längsachse des Spanners, zwischen einer Öffnung der Bohrung (104) und dem Rückschlagventil (109), angeordnet ist.

5. Ketten- oder Riemenspanner nach Anspruch 3 oder 4, bei dem der Fluiddurchgang (108) von einem von der Bohrung (104) distalen Ende des Rückschlagventils (109) zu einem Ende des Gewindes (103) verläuft.

6. Ketten- oder Riemenspanner nach einem der Ansprüche 3 bis 5, ferner umfassend einen Befestigungskopf (102), an dem der Spanner in die tragende Bohrung mit Gewinde eingeführt und festgezogen werden kann.

7. Ketten- oder Riemenspanner nach Anspruch 6, bei dem das Rückschlagventil (109) in einem Hohlraum in dem Kopf (102) angeordnet ist.

8. Ketten- oder Riemenspanner nach Anspruch 6 oder 7, bei dem der Kopf (102) neben dem Gewinde (103) und an einem Ende des Spanners angeordnet ist.

9. Ketten- oder Riemenspanner nach Anspruch 7, bei dem der Durchgang (108) von dem Hohlraum an dem distalen Ende des Rückschlagventils (109) zu dem Gewinde (103) verläuft.

10. Ketten- oder Riemenspanner nach Anspruch 9, bei dem der Durchgang (108) in einem spitzen Winkel zur Längsachse des Spanners angeordnet ist.

11. Ketten- oder Riemenspanner nach einem der vorhergehenden Ansprüche, ferner umfassend eine Fluiddichtung (125), die an den Spannerkopf (102) angrenzt.

12. Kombination eines Ketten- oder Riemenspanners und eines Tragelements, in dem der Spanner aufgenommen ist, wobei der Spanner Folgendes umfasst: einen Kolben (105), der in einer Bohrung (104) eines Gehäuses zwischen einer eingezogenen und einer ausgefahrenen Position verschiebbar ist, eine von dem Kolben (105) und der Bohrung (104) definierte Kammer (107) mit veränderlichem Volumen zum Aufnehmen von Druckhydraulikfluid, einen von der Kammer (107) durch das Gehäuse zu einem Einlass verlaufenden Fluiddurchgang (108) für die Verbindung mit einer Hydraulikfluidquelle, wobei das Gehäuse ein Außengewinde (103) zum Anbringen in einer tragenden Bohrung im Tragelement hat, wobei die Bohrung ein Innengewinde hat, **dadurch gekennzeichnet, dass** wenigstens ein Teil des Innen- oder des Außengewindes oder von beiden eine Querrille (121) hat, die mit dem Einlass des Fluiddurchgangs (108) in Verbindung steht, um Fluid über das Gewinde (103) fließen zu lassen.

13. Kombination nach Anspruch 12, bei der das Tragelement Teil eines Gehäuses für einen Verbrennungsmotor ist.

## Revendications

1. Dispositif tendeur pour chaîne ou courroie, comprenant un piston (105) pouvant être déplacé dans un alésage (104) d'un logement entre des positions rétractée et étendue, une chambre à volume variable définie par le piston (105) et l'alésage (104) afin de recevoir un fluide hydraulique sous pression, un passage pour fluide traversant le logement depuis la chambre (107) jusqu'à une entrée et permettant la communication avec une source de fluide hydraulique, le logement étant pourvu d'un filet extérieur permettant une connexion dans un alésage taraudé de support, **caractérisé par le fait qu'**au moins une partie du filet (103) comporte une rainure transversale qui est en communication avec l'entrée du passage pour fluide (108) de manière à permettre au fluide de s'écouler à travers le filet (103).

2. Dispositif tendeur pour chaîne ou courroie selon la revendication 1, dans lequel le filet (103) est disposé radialement à l'extérieur de l'alésage (104) dans le logement.

3. Dispositif tendeur pour chaîne ou courroie selon la revendication 1 ou 2, comprenant, en outre, une soupape de non-retour (109) entre ladite chambre (107) et le passage pour fluide (108) afin d'empêcher l'écoulement du fluide de la chambre (107) vers le passage pour fluide (108).

4. Dispositif tendeur pour chaîne ou courroie selon la revendication 3, dans lequel le filet (103) est disposé, dans le sens de l'axe longitudinal du dispositif tendeur, entre une ouverture de l'alésage (104) et la soupape de non-retour (109).

5. Dispositif tendeur pour chaîne ou courroie selon la revendication 3 ou 4, dans lequel le passage pour fluide (108) s'étend d'une extrémité de la soupape de non-retour (109) qui est distale par rapport à l'alésage (104) à une extrémité du filet (103).

6. Dispositif tendeur pour chaîne ou courroie selon l'une quelconque des revendications 3 à 5, comprenant, en outre, une tête de fixation (102) au moyen de laquelle le dispositif tendeur peut être inséré et serré dans ledit alésage taraudé de support.

7. Dispositif tendeur pour chaîne ou courroie selon la revendication 6, dans lequel la soupape de non-retour (109) est disposée dans une cavité dans ladite tête (102).

8. Dispositif tendeur pour chaîne ou courroie selon la revendication 6 ou 7, dans lequel la tête (102) est située de manière adjacente au filet (103) et au niveau d'une extrémité du dispositif tendeur.

9. Dispositif tendeur pour chaîne ou courroie selon la revendication 7, dans lequel le passage (108) s'étend de la cavité au niveau de ladite extrémité distale de la soupape de non-retour (109) jusqu'au filet (103).

10. Dispositif tendeur pour chaîne ou courroie selon la revendication 9, dans lequel le passage (108) est disposé de manière à former un angle aigu avec l'axe longitudinal du dispositif tendeur.

11. Dispositif tendeur pour chaîne ou courroie selon l'une quelconque des revendications précédentes, comprenant, en outre, un joint étanche aux fluides (125) qui est adjacent à la tête (102) du dispositif tendeur.

12. Combinaison d'un dispositif tendeur pour chaîne ou courroie et d'un élément de support dans lequel le dispositif tendeur est reçu, le dispositif tendeur comprenant un piston (105) pouvant être déplacé dans un alésage (104) d'un logement entre des positions rétractée et étendue, une chambre à volume variable (107) définie par le piston (105) et l'alésage (104) afin de recevoir un fluide hydraulique sous pression, un passage pour fluide (108) traversant le logement depuis la chambre (107) jusqu'à une entrée et permettant la communication avec une source de fluide hydraulique, le logement étant pourvu d'un filet extérieur (103) permettant une connexion dans un alésage de support dans l'élément de support, l'alésage étant pourvu d'un filet intérieur, **caractérisé par le fait qu'**au moins une partie de l'un des filets, intérieur ou extérieur, ou des deux filets, comporte une rainure transversale (121) qui est en communication avec l'entrée du passage pour fluide (108) de manière à permettre au fluide de s'écouler à travers le filet (103).

13. Combinaison selon la revendication 12, dans laquelle l'élément de support est une partie d'un logement pour un moteur à combustion interne.
